# EUROPÄISCHE PATENTANMELDUNG

(11) **EP 1 121 871 A2**
(43) Veröffentlichungstag der Anmeldung: **08.08.2001**
(21) Anmeldenummer: 01101229.1
(22) Anmeldetag: 19.01.2001
(51) Int. Cl.: A24C 5/60

(54) **Verfahren zum Herstellen von stabförmigen Artikeln**

(30) Priorität: 04.02.2000 DE 10004906
(71) Anmelder: Hauni Maschinenbau AG, 21033 Hamburg (DE)
(72) Erfinder: Dombek, Manfred, 21521 Dassendorf (DE)
(74) Vertreter: Eisenführ, Speiser & Partner

(57) **Zusammenfassung**

Die Erfindung betrifft ein Verfahren zum Herstellen von stabförmigen Artikeln der tabakverarbeitenden Industrie, insbesondere von Zigarette-Filter-Zigarette-Gruppen, mit den Schritten: - die Artikel werden während einer Rollbewegung mit einem Blättchen umwickelt; - die Artikel werden ohne Unterbrechung der Rollbewegung perforiert. Darüber hinaus betrifft die Erfindung eine Vorrichtung zum Herstellen von stabförmigen Artikeln der tabakverarbeitenden Industrie, mit einem Rollkanal zum Umwickeln der Artikel mit Blättchen. Diese Vorrichtung zeichnet sich dadurch aus, daß mindestens ein Abschnitt des Rollkanals als Perforationszone ausgebildet ist, in der ein Perforationsmittel zum Perforieren der Artikel auf die Artikel einwirkt.

## Beschreibung

Die Erfindung betrifft ein Verfahren zum Herstellen von stabförmigen Artikeln der tabakverarbeitenden Industrie, insbesondere von Filterzigaretten, und eine Vorrichtung zum Herstellen derartiger Artikel, welche Vorrichtung einen Rollkanal zum Umwickeln der Artikel mit Blättchen aufweist.

Für das Herstellen von Filterzigaretten werden in Filteransetzmaschinen Tabakstöcke und Filterstopfen axial fluchtend aneinandergereiht und mit einem Belagpapierblättchen umwickelt, welches zunächst an die Zigarette-Filter-Zigarette-Gruppen als "Fahne" angeheftet wird. Das Umwickeln geschieht dann in einem Rollkanal, welcher von sich mit Relativgeschwindigkeit zueinander bewegenden Flächen (Rollfläche und Gegenrollfläche) gebildet wird. Ein Beispiel zeigt die DE 37 02 915 C2 (US 4,825,882).

Häufig werden Filterzigaretten im Bereich des Filters mit einer sogenannten Ventilationszone (Zone gewollter Luftdurchlässigkeit) versehen, durch welche beim Abrauchen der Zigaretten kühle Umgebungsluft angesaugt wird, die die Anteile von Nikotin und Kondensat im Rauch beeinflussen.

Ein Verfahren zum Herstellen einer solchen Ventilationszone besteht darin, die Zigaretten in eine Rotationsbewegung um ihre Längsachse zu versetzen und mit einem gepulsten Laserstrahl eine oder mehrere Reihen kleiner Löcher in das Belagpapier und den äußeren Bereich der Filter einzubringen. Ein Beispiel zeigt die DE 27 51 522 C2 (US 4,281,670).

Im Stand der Technik werden die beiden vorgenannten Bearbeitungsschritte getrennt voneinander ausgeführt, wobei es aufgrund der mehrfachen Rotation der Artikel zu erheblichen Belastungen der Artikel durch die auftretenden Beschleunigungs- und Abbremskräfte kommt.

Aufgabe der Erfindung ist es daher, ein Verfahren und eine Vorrichtung der eingangs genannten Art zur Verfügung zu stellen, bei der die Artikel weniger beansprucht werden.

Diese Aufgabe wird erfindungsgemäß durch ein Verfahren gemäß Anspruch 1 und eine Vorrichtung gemäß Anspruch 7 gelöst.

Die Vorteile der vorliegenden Erfindung liegen insbesondere darin, daß aufgrund der nur noch einmaligen Rollung der Artikel diese schonender behandelt werden und qualitativ hochwertiger aus den Herstellungsschritten hervorgehen.

Darüber hinaus liegt ein weiterer Vorteil der Erfindung in der kompakteren Bauart der Maschine.

Eine weitere vorteilhafte Ausführungsform der Erfindung zeichnet sich dadurch aus, daß die Artikel in mindestens zwei Stufen auf die Rotationsgeschwindigkeit für das Perforieren beschleunigt werden. Dabei wird das Umwickeln mit einer ersten Rotationsgeschwindigkeit ausgeführt, während die Perforation beispielsweise mit der doppelten Rotationsgeschwindigkeit ausgeführt wird.

Bei einer anderen vorteilhaften Ausführungsform wird auch die Verzögerung nach Abschluß der Perforation der Artikel zweistufig und somit schonend ausgeführt.

Bei der erfindungsgemäßen Vorrichtung, welche einen Rollkanal zum Umwickeln der Artikel mit Blättchen aufweist, ist mindestens ein Abschnitt des Rollkanals als Perforationszone ausgebildet, in der ein Perforationsmittel zum Perforieren der Artikel auf die Artikel einwirkt. Ein solches Perforationsmittel kann beispielsweise ein Laserstrahl sein, der von einer Laserlichtquelle erzeugt wurde. Die Perforationszone der erfindungsgemäßen Vorrichtung schließt sich bevorzugt direkt an die Umwicklungszone zum Umwickeln der Artikel mit Blättchen an. Dabei können sich die Umwicklungszone und die Perforationszone sogar leicht überschneiden; dies bedeutet, daß die Perforation bereits begonnen werden kann, während sich die Artikel noch in der Umrollung befinden.

Bei der erfindungsgemäßen Vorrichtung kann der Rollkanal zum einen durch eine Rolltrommel mit gegenüberliegendem Rollklotz ausgebildet sein; oder durch zwei gegenüberliegende Trumen von Rollbändern, die auch abschnittsweise durch einen Rollklotz ersetzt sein können.

Bei einer bevorzugten Ausführungsform der Erfindung ist die Perforationszone in einem einer Rolltrommel gegenüberliegenden Rollklotz ausgebildet. Zu diesem Zweck ist in dem Rollklotz eine Perforationsöffnung definiert, welche dem Perforationsmittel das Einwirken auf die Artikel ermöglicht. Beispielsweise können durch diese Perforationsöffnung hindurch Laserstrahlen auf die zu perforierenden Artikel, die sich in dem Rollkanal in der Perforationszone befinden, einwirken.

Bei einer anderen Variante der Erfindung ist die Perforationsöffnung dadurch definiert, daß das Trum eines der zur Bildung des Rollkanals verwendeten Rollbänder geteilt ist, so daß zwischen den beiden Trumteilen eine Öffnung entsteht, durch die die Perforationsmittel auf die Artikel einwirken können. Bei einem anderen Ausführungsbeispiel sind drei parallele Trume für eines der Förderbänder vorgesehen, wobei das mittlere Trum des entsprechenden Förderbandes kurz vor der Perforationszone umgelenkt wird, so daß im Bereich der Perforationszone nur noch die beiden äußeren Trume des Förderbandes vorhanden sind und somit ebenfalls eine Perforationsöffnung gebildet wird.

Bei einer weiteren Variante der vorliegenden Erfindung besteht das Perforationsmittel aus zwei Laserstrahlen, welche aus unterschiedlichen Winkeln auf einen Schwenkspiegel zum Nachführen der Laserstrahlen treffen. Die Laserstrahlen schließen einen Winkel zwischen sich ein, der dem Abstand zweier aufeinanderfolgender, bevorzugt benachbarter Artikel angepaßt ist. Durch die parallele Laserung zweier Artikel kann für den einzelnen Laservorgang die doppelte Zeit zur Verfügung gestellt werden. Somit können die Artikel mit einer geringeren Rotationsgeschwindigkeit durch die Perforationszone geführt werden, als in dem Fall, in dem nur ein Laserstrahl zur Verfügung stünde. Die Verwendung von zwei Laserstrahlen trägt somit weiter zur schonenderen Behandlung der Artikel und somit zu einer erhöhten Qualität bei. Für die in diesem Absatz beschriebene Erfindung wird - unabhängig von der eingangs genannten Erfindung - auch selbständiger Schutz beansprucht.

Weitere bevorzugte Ausführungsformen der Erfindung sind in den Unteransprüchen angegeben.

Bevorzugte Ausführungsbeispiele der Erfindung werden nun mit Bezug auf die Zeichnung beschrieben. Die Zeichnung zeigt:
- Fig. 1: einen schematischen Querschnitt einer ersten Ausführungsform der erfindungsgemäßen Vorrichtung;
- Fig. 2: einen schematischen Querschnitt einer zweiten Ausführungsform der erfindungsgemäßen Vorrichtung;
- Fig. 3: einen schematischen Querschnitt einer dritten Ausführungsform der erfindungsgemäßen Vorrichtung;
- Fig. 4: einen schematischen Querschnitt einer vierten Ausführungsform der erfindungsgemäßen Vorrichtung;
- Fig. 5: einen schematischen Querschnitt einer fünften Ausführungsform der erfindungsgemäßen Vorrichtung;
- Fig. 6: einen schematischen Querschnitt einer sechsten Ausführungsform der erfindungsgemäßen Vorrichtung;
- Fig. 7: eine schematische Darstellung einer mit Hilfe der erfindungsgemäßen Vorrichtung perforierten Doppelfilterzigarette; und
- Fig. 8: eine schematische Darstellung des Strahlenganges von Laserstrahlen bei einer siebten Ausführungsform der erfindungsgemäßen Vorrichtung.

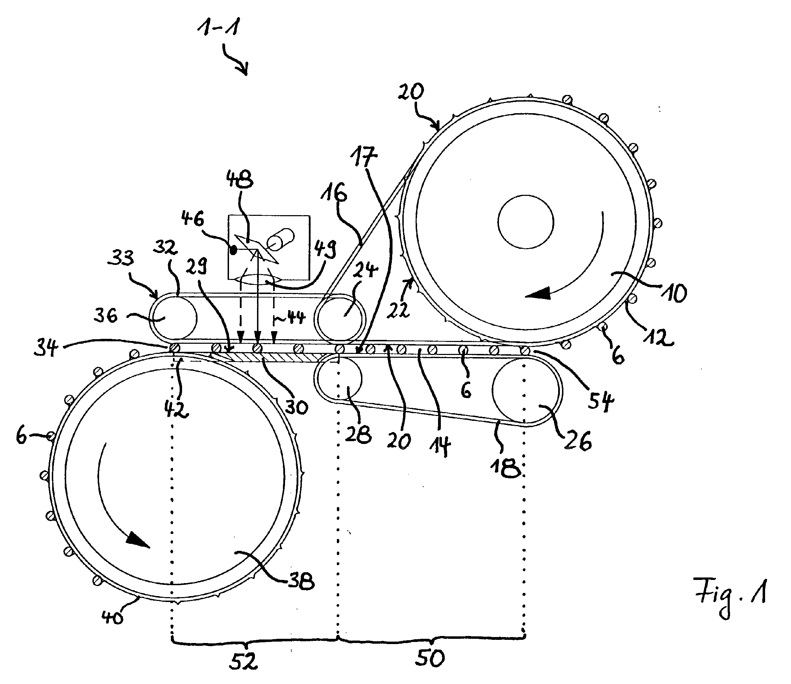

Fig. 1 zeigt einen schematischen Querschnitt einer erfindungsgemäßen Vorrichtung in einer ersten Ausführungsform 1-1. Die Vorrichtung 1-1 weist eine Zufördertrommel 10 auf. Die Zufördertrommel 10 weist Stege 12 zur Aufnahme von Zigarette-Filter-Zigarette-Gruppen 6 mit beleimten, angehefteten (nicht dargestellten) Belegpapierblättchen auf. Von der Zufördertrommel 10 werden die Zigarette-Filter-Zigarette-Gruppen 6 direkt an einen Rollkanal 14 übergeben. Der Rollkanal 14 wird mit einem als Umwicklungszone 50 dienenden Abschnitt durch die Oberflächen 20, 17 zweier Förderbänder 16 und 18 gebildet. Die Oberfläche 20 bildet eine Rollfläche für die Zigarette-Filter-Zigarette-Gruppen 6, während die im Rollkanal 14 gegenüberliegende Oberfläche 17 eine Gegenrollfläche bildet. Das erste Förderband 16 läuft mit seiner Oberfläche 20 fluchtend mit der Umfangsoberfläche 22 der Zufördertrommel 10 um die Zufördertrommel 10 um, so daß die Zigarette-Filter-Zigarette-Gruppen 6 übergangslos von den Stegen 12 an den Rollkanal 14 übergeben werden können. Weiterhin wird das Förderband 16 über eine Umlenkrolle 24 zur Zufördertrommel 10 zurück umgelenkt.

Das zweite Förderband 18 läuft über Umlenkrollen 26 und 28 um. Das zweite Förderband 1 8 läuft mit der halben Umfangsgeschwindigkeit der Fördertrommel 10, während das erste Förderband 16 mit der Umfangsgeschwindigkeit der Fördertrommel 10 läuft. DerTeilungsabstand der Doppelfilterzigaretten 6 in dem Rollkanal 14 ist um ein Viertel kleiner als auf der Fördertrommel 10.

Der Rollkanal 14 wird nicht durchgängig durch die Förderbänder 16 und 18 gebildet. Vielmehr bildet das in der Fig. 1 unten dargestellte Förderband 18 nur bis zu der Umlenkrolle 28 die Gegenrollfläche des Rollkanals. Nach dem Auslenken des Förderbandes 18 wird die Gegenrollfläche von der Oberfläche 29 eines Rollklotzes 30 gebildet. Das Förderband 16 geht an der mehrteiligen Umlenkrolle 24 in ein Förderband 32 über, welches dann mit seiner Oberfläche 33 die Rollfläche des Rollkanals 14 bildet. Die Umlenkrolle 24 besteht aus mehreren koaxial zueinander angeordneten Teilrollen. Das Förderband 32 läuft mit der doppelten Geschwindigkeit wie das Förderband 16. Das Förderband 32 läuft über eine weitere Teilrolle der Umlenkrolle 24 um, wobei es am Ende 34 des Rollkanals 14 über eine Umlenkrolle 36 umgelenkt wird. Am Ende 34 des Rollkanals 14 übernimmt eine Abfördertrommel 38 die Doppelfilterzigaretten 6 aus dem Rollkanal 14. Zu diesem Zweck weist die Abfördertrommel 38 Stege 40 auf. Die Abfördertrommel 38 läuft in einer Ausnehmung 42 des Rollklotzes 30, um die Doppelfilterzigaretten 6 übergangslos mit den Stegen 40 aufnehmen zu können.

Das Förderband 32 ist zweigeteilt ausgeführt. Die so zwischen den beiden Hälften des Förderbandes 32 gebildete, nicht dargestellte Öffnung dient als Perforationsöffnung im Sinne der Erfindung. Durch diese Perforationsöffnung hindurch kann der als erfindungsgemäßes Perforationsmittel dienende Laserstrahl 44 hindurch auf die sich in dem Rollkanal 14 auf dem Rollklotz 30 befindenden Doppelfilterzigaretten 6 zur Perforation derselben einwirken. Der Laserstrahl 44 wird in einer Laserstrahlquelle 46 erzeugt und über einen Schwenkspiegel 48 in Richtung auf die Doppelfilterzigaretten 6 umgelenkt. Von dem Schwenkspiegel 48 wird der Laserstrahl 44 durch eine fokuskorrigierte Linse 49 hindurch auf die Doppelfilterzigaretten 6 in dem Rollkanal 14 geleitet. Der Schwenkspiegel 48 dient dazu, den Laserstrahl 44 den sich in dem Rollkanal 14 im Bereich des Rollklotzes 30 durch die Perforationszone, die durch den Rollklotz 30 definiert wird, bewegenden Doppelfilterzigaretten 6 nachzuführen. Der Teilungsabstand der Doppelfilterzigaretten 6 im Bereich der durch den Rollklotz 30 gebildeten Perforationszone der Vorrichtung 1-1 entspricht dem Teilungsabstand der Doppelfilterzigaretten 6 auf der Umfangsoberfläche 22 der Zufördertrommel 10, da die Fördergeschwindigkeit des Förderbandes 32 der doppelten Fördergeschwindigkeit des Förderbandes 16 entspricht.

Der Rollkanal 14 weist daher die durch das Förderband 18 definierte Umwicklungszone 50 und eine sich direkt daran anschließende, durch den Rollklotz 30 definierte Perforationszone 52 auf. Während des Durchlaufens des Rollkanals 14 bleiben die Doppelfilterzigaretten 6 in ständiger Rotation. Einzig die Rotationsgeschwindigkeit verändert sich. So werden die Doppelfilterzigaretten 6 von einem Stillstand der Rotation auf der Umfangsoberfläche 22 der Zufördertrommel 10 am Eingang 54 des Rollkanals 14 zunächst auf die Umrollungsrotationsgeschwindigkeit in der Umwicklungszone 50 beschleunigt, worauf sie bei dem Übergang von dem Förderband 18 auf den Rollklotz 30 an der Stelle der Umlenkrolle 28 dann auf die Perforationsrotationsgeschwindigkeit in der Perforationszone 52 beschleunigt werden. Schließlich geraten sie durch Übergabe an die Stege 40 der Abfördertrommel 38 wieder in einen Stillstand der Rotation. Zusammengefaßt verhalten sich die Teilungsabstände der Ausführungsform 1-1 der Fig. 1 in der Reihenfolge Zufördertrommel 10, Umwicklungszone 50, Perforationszone 52 und Abfördertrommel 38 wie 12:9:12:12.

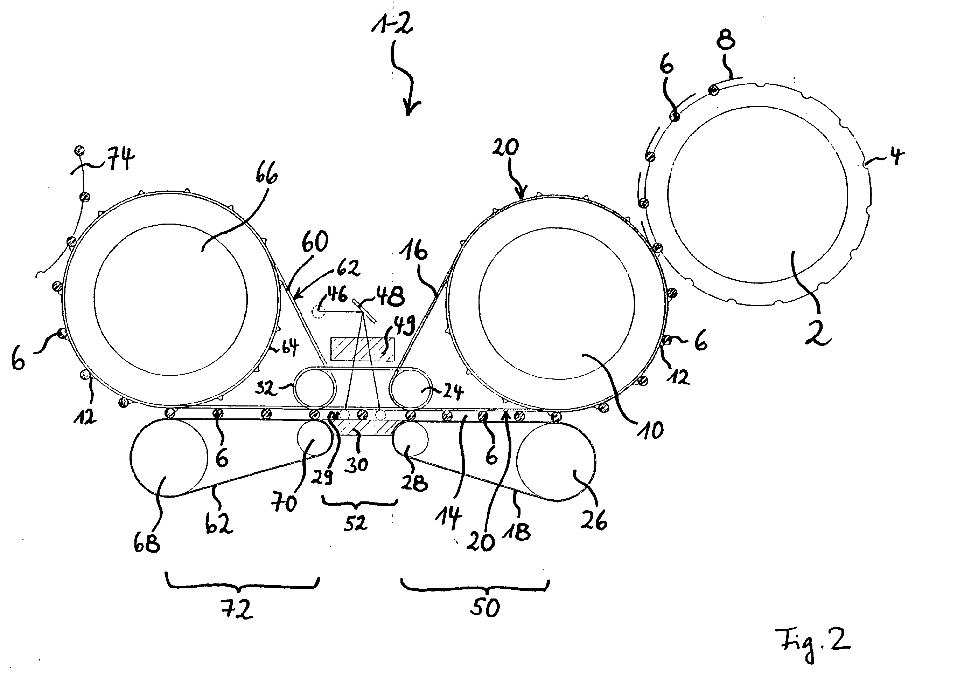

Fig. 2 zeigt eine erfindungsgemäße Vorrichtung in einer zweiten Ausführungsform 1-2. Teile, die mit Teilen der in Fig. 1 dargestellten Vorrichtung 1-1 im wesentlichen übereinstimmen, sind hier mit gleichen Bezugszeichen bezeichnet. Die Vorrichtung 1-2 zeichnet sich dadurch aus, daß sie zu beiden Seiten der Perforationszone 52 spiegelbildlich ausgebildet ist. Das bedeutet, daß sich der Rollkanal 14 nach dem Rollklotz 30 weiter fortsetzt, indem weitere Förderbänder 60 und 62 in der Art der Förderbänder 16 und 18 vorgesehen sind. Dabei läuft das Förderband 60 mit seiner Oberfläche 62 fluchtend zu einer Umfangsoberfläche 64 einer Abfördertrommel 66 ab, während das Förderband 62 über zwei Umlenkrollen 68 und 70 umläuft. Die Abfördertrommel 66 ist identisch mit der Zufördertrommel 10 und weist daher ebenfalls Stege 12 zum Abtransport der Doppelfilterzigaretten 6 aus dem Rollkanal 14 auf.

Durch die spiegelbildliche Anordnung von Abfördertrommel 66 und Zufördertrommel 10 bzw. auf der Abfördertrommel 66 umlaufendem Förderband 60 und auf der Zufördertrommel 10 umlaufendem Förderband 16 und den entsprechend zugeordneten Förderbändern 18 und 62 werden die im Bereich der Perforationszone 52 perforierten Doppelfilterzigaretten 6 nach Verlassen der Perforationszone 52 in einer durch das Förderband 62 in dem Rollkanal 14 definierten Transportzone 72 weitertransportiert, bevor sie schließlich von den Stegen 12 der Abfördertrommel 66 aufgenommen werden. Beim Übergang von der Perforationszone 52 in die Transportzone 72 werden die Doppelfilterzigaretten 6 in ihrer Rotation zum Stillstand gebracht. In der Transportzone 72 werden die Doppelfilterzigaretten 6 ohne Rotation bis zur Abfördertrommel 66 befördert. Der Teilungsabstand in der Transportzone 72 entspricht dem Teilungsabstand der Doppelfilterzigaretten 6 auf der Zufördertrommel 10 bzw. auf der Abfördertrommel 66. Von der Abfördertrommel 66 werden die Doppelfilterzigaretten 6 schließlich auf eine Trommel 74 übergeben. Zusammengefaßt verhalten sich die Teilungsabstände der Ausführungsform 1-2 der Fig. 2 in der Reihenfolge Zufördertrommel 10, Umwicklungszone 50, Perforationszone 52, Abbremszone 72 und Abfördertrommel 66 wie 12:9:12:12:12.

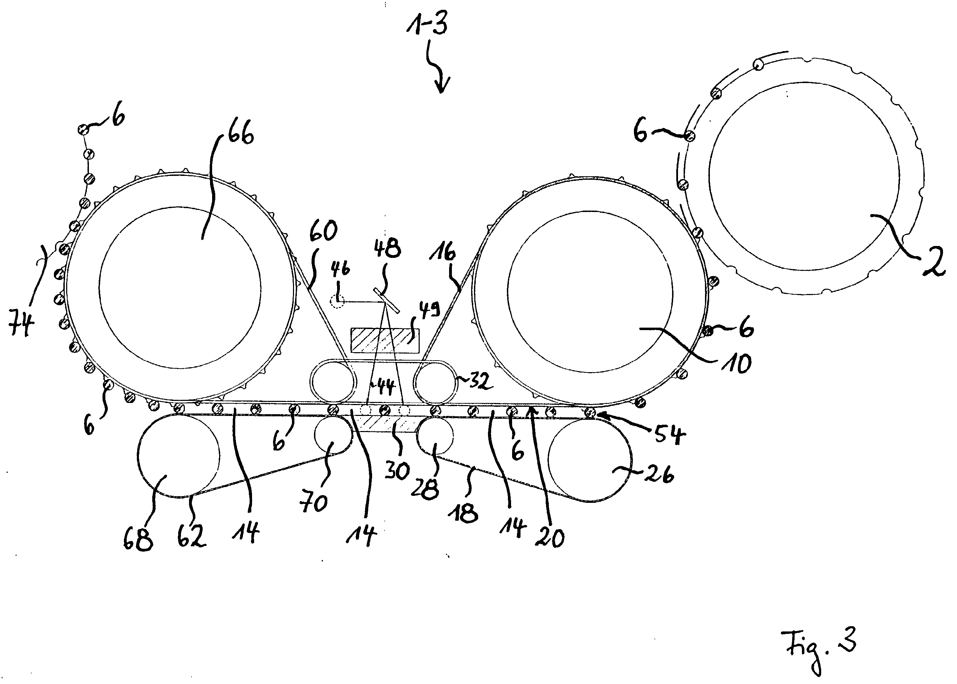

Fig. 3 zeigt eine erfindungsgemäße Vorrichtung in einer dritten Ausführungsform 1-3. Die Ausführungsform 1-3 der Fig. 3 unterscheidet sich von der Ausführungsform 1-2 gemäß Fig. 2 nur in einem veränderten Teilungsabstand der Doppelfilterzigaretten 6 in der Transportzone 72 und der Abfördertrommel 66. Bei der Ausführungsform 1-3 entspricht dieser Teilungsabstand dem Teilungsabstand in der Umwicklungszone 50 der Ausführungsform 1-2. Darüber hinaus ist der Teilungsabstand der Doppelfilterzigaretten 6 auf der Abfördertrommel 66 weiter um ein Drittel gegenüber der Transportzone 72 verringert, so daß er insgesamt halb so groß ist wie auf der Zufördertrommel 10. Die Doppelfilterzigaretten 6 rotieren daher in der Transportzone 72 mit einer geringeren Rotationsgeschwindigkeit gegenüber der Rotationsgeschwindigkeit in der Perforationszone 52 weiter. Zusammengefaßt verhalten sich die Teilungsabstände der Ausführungsform 1-3 der Fig. 3 in der Reihenfolge Zufördertrommel 10, Umwicklungszone 50, Perforationszone 52, Transportzone 72 und Abfördertrommel 66 wie 12:9:12:9:6.

Im übrigen ist die Ausführungsform 1-3 der Fig. 3 gegenüber der Ausführungsform 1-2 der Fig. 2 unverändert.

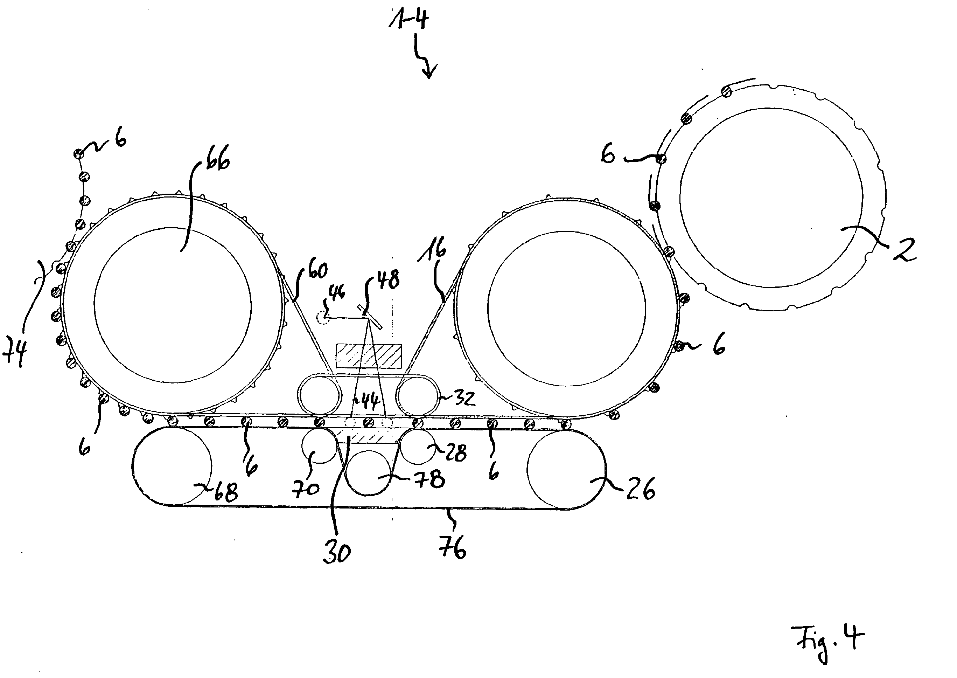

Fig. 4 zeigt eine erfindungsgemäße Vorrichtung in einer vierten Ausführungsform 1-4. Die Ausführungsform 1-4 unterscheidet sich von der Ausführungsform 1-3 der Fig. 3 nur darin, daß anstelle von zwei Förderbändern 18 und 62 ein einziges Förderband 76 verwendet wird, welches um den Rollklotz 30 mit Hilfe einer Umlenkrolle 78 umgelenkt wird. Die Teilungsabstände der Ausführungsform 1-4 der Fig. 4 verhalten sich wie die Teilungsabstände in der Ausführungsform 1-3 der Fig. 3.

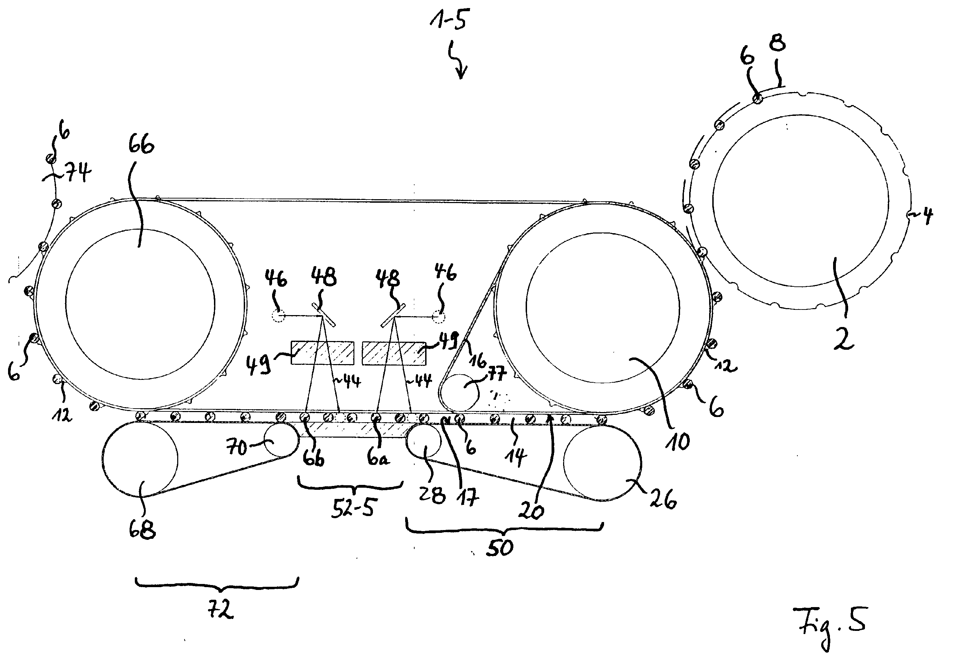

Fig. 5 zeigt eine erfindungsgemäße Vorrichtung in einer fünften Ausführungsform 1-5. Die Ausführungsform 1-5 der Fig. 5 entspricht im wesentlichen der Ausführungsform 1-2 der Fig. 2. Im Unterschied zur Ausführungsform 1-2 weist die Ausführungform 1-5 jedoch zwei Laserquellen 46 und zwei Schwenkspiegel 48 und zwei fokuskorrigierte Linsen 49 auf. In der gegenüber der Perforationszone 52 der Ausführungsform 1-2 vergrößerten Perforationszone 52-5 können somit zwei Doppelfilterzigaretten 6a und 6b gleichzeitig perforiert werden. Obwohl der Teilungsabstand der Doppelfilterzigaretten 6 in der Perforationszone 52-5 nochmals um ein Drittel gegenüber dem Teilungsabstand in der Umrollungszone 50 abgesenkt ist, und die Doppelfilterzigaretten 6 entsprechend langsamer gerollt werden, steht zur Perforation der Doppelfilterzigaretten 6 ein Teilungsabstand zur Verfügung, der dem Teilungsabstand der Doppelfilterzigaretten 6 auf der Zufördertrommel 10 entspricht, da die Laser jeweils nur jede zweite Doppelfilterzigarette 6 perforieren. Darüber hinaus läuft bei der Ausführungsform 1-5 der Fig. 5 das erste Förderband 16 auch um die Abfördertrommel 66 um. Bei dieser Ausführungsform besteht das Förderband 16 aus drei (nicht dargestellten) parallel verlaufenden Teilen, einem mittleren und zwei äußeren. Um die Perforationsöffnung für die Perforationszone 52-5 zur Verfügung zu stellen, wird jedoch der mittlere Teil des Förderbandes 16 mit Hilfe der Umlenkrolle 77 ausgelenkt, während die beiden äußeren Teile weiter die Rollfläche des Rollkanals 14 bilden und schließlich von der Abfördertrommel 66 umgelenkt werden.

Am Anfang der Transportzone 72 werden die Doppelfilterzigaretten 6 dann wieder auf einen Teilungsabstand gebracht, der dem Teilungsabstand der Doppelfilterzigaretten 6 in der Umwicklungszone 50 entspricht, wobei sie schließlich beim Übergang von Transportzone 72 auf die Abfördertrommel 66 auf den ursprünglichen auch auf der Zufördertrommel 10 vorhandenen Teilungsabstand gebracht werden. Das Verhältnis der Teilungsabstände in der Reihenfolge Zufördertrommel 10, Umwicklungszone 50, Perforationszone 52-5, Transportzone 72 und Abfördertrommel 66 entspricht daher 12:9:6:9:12.

Durch entsprechende Anpassung kann auch die Ausführungsform 1-1 nach Fig. 1 mit zwei Laserquellen 46 betrieben werden.

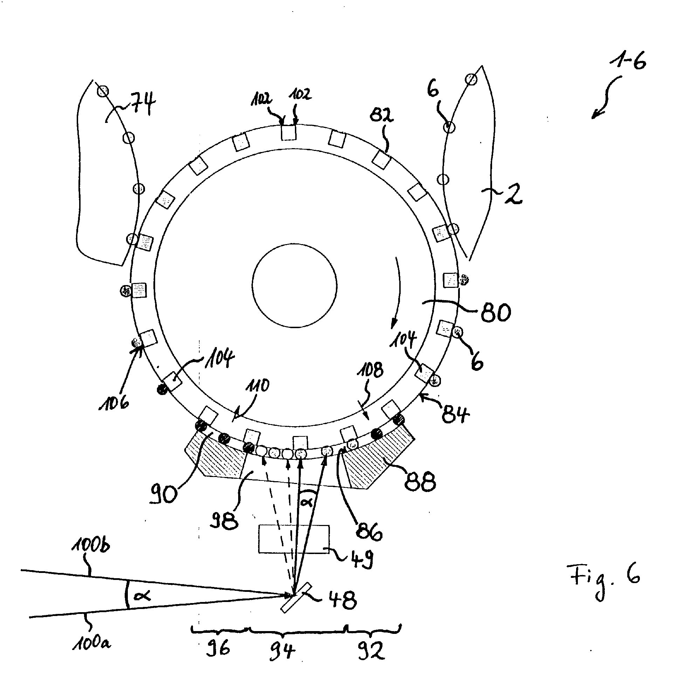

Fig. 6 zeigt eine erfindungsgemäße Vorrichtung in einer sechsten Ausführungsform 1-6. Bei dieser Ausführungsform werden die Doppelfilterzigaretten 6 von einer Zufördertrommel 2 an eine Rolltrommel 80 übergeben. Die Rolltrommel 80 weist relativ flache Mulden 82 in ihrer Umfangsoberfläche 84 auf. Konzentrisch zu der als Rollfläche dienenden Umfangsoberfläche 84 der Rolltrommel 80 ist eine Gegenrollfläche 86 eines Rollklotzes 88 angeordnet. Die Umfangsoberfläche 84 und die Gegenrollfläche 86 bilden einen Rollkanal 90, der eine Umwicklungszone 92 und eine Perforationszone 94 und eine Transportzone 96 enthält. Die Perforationszone 94 wird durch eine Perforationsöffnung 98 in dem Rollklotz 88 gebildet, durch die Laserstrahlen 100a und 100b über einen Schwenkspiegel 48 und eine fokuskorrigerte Linse 49 auf die Doppelfilterzigaretten 6 einwirken und somit Öffnungen in der Umfangsoberfläche perforieren.

Die beiden Laserstrahlen 100a und 100b schließen zwischen sich einen Winkel α ein. Dieser Winkel α ist so gewählt, daß die Laserstrahlen 100a und 100b benachbarte Artikel, die sich in der Perforationszone 94 befinden, gleichzeitig perforieren können. Dadurch steht für die Perforation die doppelte Zeit zur Verfügung verglichen mit der Perforation mit nur einem Laserstrahl, was eine entsprechend langsamere und somit schonendere Rollung zur Folge hat.

Um zu verhindern, daß die Doppelfilterzigaretten 6 in dem Rollkanal 90 über die Kanten 102 der Mulden 82 hinwegrollen müssen, weisen die Mulden radial ausfahrbare Hebestege 104 auf, die nach dem Ausfahren eine vollständig ebene Umfangsoberfläche 84 der Rolltrommel 80 schaffen. Dieses Ausfahren der Hebestege 104 ist durch den Pfeil 108 symbolisiert. Durch den Pfeil 110 ist das radiale Einfahren der Hebestege 104 symbolisiert, um die Mulden 82 wiederum in der Umfangsoberfläche 84 zu bilden, um darin die mit nicht dargestellten Blättchen in der Umrollungszone 92 umrollten und anschließend in der Perforationszone 94 perforierten und in der Transportzone 96 weiterbeförderten Doppelfilterzigaretten 6 wiederum auf der Rolltrommel 80 abtransportieren zu können. Aus den Mulden 82 werden die so hergestellten Doppelfilterzigaretten 6 schließlich von einer Abfördertrommel 74 übernommen.

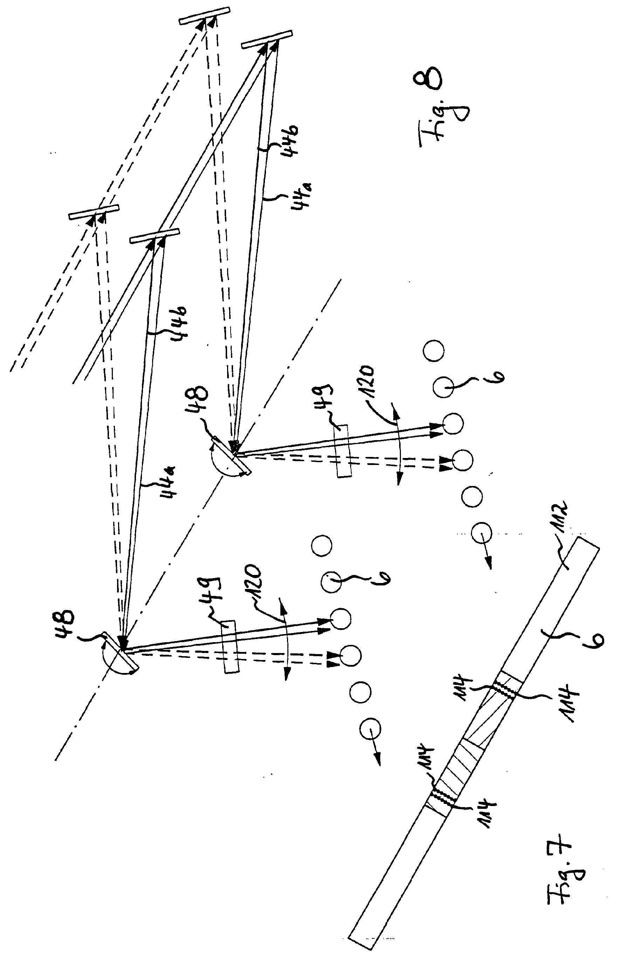

Fig. 7 zeigt eine Doppelfilterzigarette 6 in einem Zustand nach dem Verlassen des Rollkanals 14 bzw. des Rollkanals 90. Die Abbildung zeigt die in die Umfangsoberfläche 112 der Doppelfilterzigarette 6 einperforierten Öffnungen 114. In der in Fig. 7 dargestellten Ausführungsform sind jeweils zwei dicht nebeneinander parallel entlang des Umfangs verlaufende Reihen von Öffnungen 114 dargestellt.

Die. Fig. 8 zeigt das Einbringen von zwei dicht nebeneinander parallel verlaufenden Reihen von Perforationsöffnungen 114 gemäß Fig. 7. Dabei werden jeweils nahezu parallel verlaufende Laserstrahlen 44a und 44b auf die Schwenkspiegel, beispielsweise der Ausführungsform 1-5 der Fig. 5 oder der Ausführungsform 1-6 der Fig. 6 geleitet, um durch das durch die Pfeile 120 symbolisierte Nachführen auf den rollenden Doppelfilterzigaretten 6 die Reihen von Perforationsöffnungen 114 einzuperforieren.

## Patentansprüche

1. Verfahren zum Herstellen von stabförmigen Artikeln der tabakverarbeitenden Industrie, insbesondere von Filterzigaretten (6), mit den Schritten:
- die Artikel (6) werden während einer Rollbewegung mit einem Blättchen umwickelt;
- die Artikel (6) werden ohne Unterbrechung der Rollbewegung perforiert.

2. Verfahren nach Anspruch 1,
wobei die Artikel (6) während der Perforation die Rolibewegung mindestens mit der Rotationsgeschwindigkeit ausführen, die sie während der Umwicklung aufweisen.

3. Verfahren nach einem der vorstehenden Ansprüche,
wobei die Artikel (6) in mindestens zwei Stufen auf die Rotationsgeschwindigkeit der Rollbewegung während der Perforation beschleunigt werden.

4. Verfahren nach Anspruch 3,
wobei die erste Stufe der Beschleunigung im Bereich des Beginns (54) der Umwicklung ausgeführt wird, während die zweite Stufe der Beschleunigung im Bereich (28) des Übergangs von Umwicklung der Artikel (6) zur Perforation der Artikel (6) ausgeführt wird.

5. Verfahren nach einem der Ansprüche 3 oder 4,
wobei die Rotationsgeschwindigkeit der Artikel (6) während der Perforation etwa doppelt so hoch ist verglichen mit der Rotationsgeschwindigkeit während der Umwicklung.

6. Verfahren nach einem der vorstehenden Ansprüche,
wobei die Artikel (6) in mindestens zwei Stufen von der Rotationsgeschwindigkeit während der Perforation auf einen Stillstand der Rotation der Artikel (6) nach der Perforation verzögert werden.

7. Vorrichtung zum Herstellen von stabförmigen Artikeln der tabakverarbeitenden Industrie,
mit einem Rollkanal (14) zum Umwickeln der Artikel (6) mit Blättchen (8), dadurch gekennzeichnet, daß mindestens ein Abschnitt des Rollkanals als Perforationszone (52, 52-5, 94) ausgebildet ist, in der ein Perforationsmittel (44) zum Perforieren der Artikel (6) auf die Artikel (6) einwirkt.

8. Vorrichtung nach Anspruch 7,
bei der der Rollkanal (14) eine Umwicklungszone (50, 92) aufweist, in der die Artikel (6) mit den Blättchen (8) umwickelt werden,
wobei die Umwicklungszone (50, 92) und die Perforationszone (52, 52-5, 94) unmittelbar aufeinanderfolgen oder sich in angrenzenden Randabschnitten teilweise überschneiden.

9. Vorrichtung nach Anspruch 8,
wobei der Rollkanal (90) aus einer eine Umfangsoberfläche (84) aufweisenden Rolltrommel (80) und einem der Umfangsoberfläche (84) gegenüberliegenden, eine Gegenrollfläche (86) aufweisenden Rollklotz (88) gebildet ist.

10. Vorrichtung nach Anspruch 9,
wobei die Perforationszone (94) durch eine Perforationsöffnung in der Rolltrommel (80) definiert ist, welche Perforationsöffnung dem Perforationsmittel (44) das Einwirken auf die Artikel (6) ermöglicht.

11. Vorrichtung nach Anspruch 8,
wobei der Rollkanal (14) zumindest teilweise von benachbarten Trumen eines ersten (16) und eines zweiten (18) Rollbandes gebildet ist.

12. Vorrichtung nach Anspruch 11,
wobei der Rollkanal (14) zumindest im Bereich der Umwicklungszone (50) von den benachbarten Trumen gebildet wird.

13. Vorrichtung nach Anspruch 12,
wobei der Rollkanal (14) im Bereich der Perforationszone (52, 52-5) durch ein Trum eines ersten Rollbandes (16) und einer Rollfläche (29) eines Rollklotzes (30) gebildet ist.

14. Vorrichtung nach Anspruch 9 oder 13,
wobei die Perforationszone (94) durch eine Perforationsöffnung in dem Rollklotz (30) definiert ist, welche Perforationsöffnung dem Perforationsmittel (44) das Einwirken auf die Artikel (6) ermöglicht.

15. Vorrichtung nach Anspruch 13,
wobei die Perforationszone (52, 52-5) durch eine Perforationsöffnung in dem ersten Rollband (16) definiert ist.

16. Vorrichtung nach Anspruch 15,
mit einem mindestens zweigeteilten ersten Rollband (16, 32),
wobei am Beginn der Perforationszone (52, 52-5) eine Umlenkung (77) zum Umlenken eines Teils des ersten Rollbandes (16) vorgesehen ist, um die Perforationsöffnung zu bilden.

17. Vorrichtung nach Anspruch 13,
wobei im Bereich des Rollklotzes (30) ein drittes Rollband (32) vorgesehen ist, welches mit den Artikeln (6) im Bereich der Perforationszone (52) nur abschnittsweise in Kontakt steht, um derart die Perforationsöffnung für das Perforationsmittel (44) zu definieren.

18. Vorrichtung nach einem der Ansprüche 7 bis 17,
wobei das Perforationsmittel aus zwei Laserstrahlen (44) gebildet ist, welche aus unterschiedlichen Winkeln auf einen Schwenkspiegel (48) zum Nachführen der Laserstrahlen (44) treffen.

19. Vorrichtung nach Anspruch 18,
wobei die Laserstrahlen (44) einen Winkel (a) zwischen sich einschließen, der dem Abstand zweier aufeinanderfolgender Artikel (6) angepaßt ist.

20. Vorrichtung nach einem der Ansprüche 9 bis 19,
wobei die Rolltrommel (80) Mulden (82) zur Aufnahme der Artikel (6) aufweist, welche Mulden (82) ausfahrbare Stützflächen (104) aufweisen, die in ihrem ausgefahrenen Zustand die Mulden (82) der Rolltrommel (80) derart überbrücken, daß eine glatte Umfangsoberfläche (84) der Rolltrommel (80) entsteht.
